(19) Europäisches Patentamt
European Patent Office
Office européen des brevets

(11) Veröffentlichungsnummer: **0 118 863**
**A1**

# (12) EUROPÄISCHE PATENTANMELDUNG

(21) Anmeldenummer: **84102338.5**

(22) Anmeldetag: **05.03.84**

(51) Int. Cl.³: **C 07 C 91/26**
A 01 N 33/12

(30) Priorität: **10.03.83 DE 3308461**

(43) Veröffentlichungstag der Anmeldung:
**19.09.84 Patentblatt 84/38**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Kropp, Rudolf**
**Sprottauer Strasse 2**
**D-6703 Limburgerhof(DE)**

(72) Erfinder: **Fischer, Martin, Dr.**
**Elbingerweg 1**
**D-6700 Ludwigshafen 29(DE)**

(72) Erfinder: **Ammermann, Eberhard, Dr.**
**Sachsenstrasse 3**
**D-6700 Ludwigshafen(DE)**

(72) Erfinder: **Pommer, Ernst-Heinrich, Dr.**
**Berliner Platz 7**
**D-6703 Limburgerhof(DE)**

## (54) Substituierte Pentahydroxyhexylammoniumsalze, diese enthaltende fungizide Mittel und Verfahren zur Bekämpfung von Pilzen.

(57) Fungizide Mittel, enthaltend eine Verbindung der allgemeinen Formel

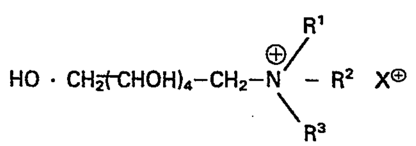

in der $R^1$, $R^2$, $R^3$ gleich oder verschieden sind und einen gegebenenfalls durch Alkoxycarbonyl substituierten Alkylrest, einen Cycloalkylrest, einen gegebenenfalls substituierten Aralkylrest sowie einen gegebenenfalls substituierten Arylrest bedeuten und darüber hinaus $R^1$ und $R^2$ Glieder eines gemeinsamen 5- oder 6-gliedrigen gegebenenfalls heterocyclischen Ringes sein können, und X einen Säurerest bedeutet sowie entsprechende Pentahydroxy-hexylammoniumsalze, in denen $R^1$, $R^2$ und $R^3$ verschieden von Methyl sind.

EP 0 118 863 A1

Croydon Printing Company Ltd.

Substituierte Pentahydroxyhexylammoniumsalze, diese enthaltende fungizide Mittel und Verfahren zur Bekämpfung von Pilzen

Die vorliegende Erfindung betrifft substituierte Pentahydroxyhexylammoniumsalze, diese enthaltende fungizide Mittel und Verfahren zur Bekämpfung von Pilzen, insbesondere pflanzenpathogenen Pilzen.

Die fungizide Wirkung von N-Trichlormethylthiotetrahydrophthalimid und N-Trichlormethylthiophthalimid ist bekannt (R. Wegler, "Chemie der Pflanzenschutz- und Schädlingsbekämpfungsmittel", Bd. 2., Seite 109 und Bd. 4, Seite 191, Springer-Verlag, Berlin/Heidelberg/New York, 1970 bzw. 1977).

Es wurde gefunden, daß quartäre 2,3,4,5,6-Pentahydroxy-n-hexyl-1-ammoniumsalze der allgemeinen Formel

$$HO \cdot CH_2(CHOH)_4-CH_2-\overset{\oplus}{N}(R^1)(R^2)(R^3) \quad X^{\ominus}$$

in der $R^1$, $R^2$, $R^3$ gleich oder verschieden sind und einen gegebenenfalls durch Alkoxycarbonyl mit 2 bis 4 Kohlenstoffatomen substituierten Alkylrest mit 1 bis 20 Kohlenstoffatomen, einen Cycloalkylrest mit 3 bis 6 Kohlenstoffatomen, einen gegebenenfalls durch Halogen im Arylrest substituierten Aralkylrest mit 7 bis 15 Kohlenstoffatomen sowie einen gegebenenfalls durch Hydroxy, Halogen, Nitro- oder Alkoxy mit 1 bis 2 Kohlenstoffatomen substituierten Arylrest bedeuten und darüber hinaus $R^1$ und $R^2$ Glieder eines gemeinsamen 5- oder 6-gliedrigen Ringes sein können, der noch weitere Heteroatome enthalten kann, und X einen Säurerest bedeutet, eine gute fungizide Wirkung besitzen.

Alkoxycarbonyl mit 2 bis 4 Kohlenstoffatomen ist beispielsweise Methoxycarbonyl oder Ethoxycarbonyl.
Alkyl mit 1 bis 20 C-Atomen ist beispielsweise Octadecyl, Hexadecyl, Dodecyl, Octyl, Hexyl und insbesondere Alkyl mit 1 bis 4 C-Atomen z.B. Methyl, Ethyl, Propyl, Butyl.
Cycloalkyl mit 3 bis 6 Kohlenstoffatomen ist beispielsweise Cyclopropyl, Cyclopentyl, Cyclohexyl.
Aralkyl mit 7 bis 15 C-Atomen ist beispielsweise Benzyl, Phenylethyl, Phenylpropyl.
Halogen ist insbesondere Chlor oder Brom.
Aryl ist beispielsweise Naphthyl und insbesondere Phenyl.

Sws/Kl

Ein Heteroatome enthaltender 5- oder 6-gliedriger Ring ist beispielsweise ein Stickstoff, Sauerstoff oder Schwefel enthaltender Ring, beispielsweise Pyrrolidin, Piperidin, Morpholin, Thiomorpholin, Triazol, Imidazol, N'-Methyl-piperazin.

X ist ein Säurerest insbesondere der Rest einer nichtphytotoxischen anorganischen oder organischen Säure, z.B. Salzsäure, Bromwasserstoffsäure, Schwefelsäure, Phosphorsäure, Salpetersäure, Dodecylbenzolsulfonsäure, Toluolsulfonsäure, Essigsäure, Propionsäure, Bernsteinsäure, Weinsäure, Benzoesäure, Salizylsäure, Ascorbinsäure.

Die Verbindung 2,3,4,5,6-Pentahydroxy-n-hexyl-1-amin mit der Konfiguration des D-Sorbits wird als Glucamin bezeichnet.

Als bevorzugte Wirkstoffe seien genannt:

Nr.

1. N,N,N-Trimethyl-D-glucammonium-chlorid, Analyse: Chlorid 13,4 %; ber. 13,6 %, $^{H}$-NMR-Spektrum: Singulett bei 3,1 ppm für 3 Methylgruppe
2. N,N-Dimethyl-N-dodecyl-D-glucammonium-jodid Jod 21,5 %, ber. 25,1 %, Fp. 153-155°C
3. N-Methyl-N-ethyl-N-dodecyl-D-glucammonium-bromid Bromid 17,1 %; ber. 16,9 %, $^{H}$-NMR-Spektrum: 1,05 ppm (t) für 3 Protonen der $^{\oplus}$N-ET-Gruppe
4. N,N-Diethyl-N-dodecyl-D-glucammonium-bromid Bromid 15,7 %; ber. 16,4 %, $^{H}$-NMR-Spektrum: 1,05 ppm (t) für 6 Protonen der $^{\oplus}N<^{Et}_{Et}$ -Gruppe
5. N-Methyl-N-propyl-N-dodecyl-D-glucammonium-bromid Bromid 14,1 %; ber. 16,4 % $[\alpha]^{20}_{D}$ = -10,5° (c = 2, Wasser)
6. N-Methyl-N-isopropyl-N-dodecyl-D-glucammonium-bromid Bromid 16,7 %; ber. 16,4 % $[\alpha]^{20}_{D}$ = -10,1° (c = 2, Wasser)
7. N-Methyl-N-butyl-N-dodecyl-D-glucammonium-bromid Bromid 13,4 %; ber. 16,0 % $[\alpha]^{20}_{D}$ = -10,3° (c = 2, Wasser)
8. N-Methyl-N-decyl-N-dodecyl-D-glucammonium-bromid Bromid 11,6 %; ber. 13,7 % $[\alpha]^{20}_{D}$ = -10° (c = 1, Wasser)
9. N-Methyl-N,N-di-dodecyl-D-glucammonium-bromid Bromid 9,5 %; ber. 13,0 % $[\alpha]^{20}_{D}$ = -9,9° (c = 1, Wasser)
10. N-Methyl-N-dodecyl-N-octadecyl-D-glucammonium-bromid Bromid 10,6 %; ber. 11,5 % $[\alpha]^{20}_{D}$ = -10,1° (c = 1, Wasser)
11. N-Methyl-N-(3-phenyl-propyl)-N-dodecyl-D-glucammoniumbromid Bromid 12,3 %; ber. 14,2 % $^{H}$-NMR-Spektrum: 7,5-7,7 ppm für 5 aromatische Protonen
12. N-Methyl-N-benzyl-N-dodecyl-D-glucammonium-chlorid Chlorid 6,4 %; ber. 7,2 % $^{H}$-NMR-Spektrum: 2,95 ppm (2 x s) für $^{\oplus}N-CH_3$ (Isomeren)

13. N-Methyl-N-(4-chlorbenzyl)-N-dodecyl-D-glucammoniumbromid Bromid 13,1 %; ber. 14,0 % H-NMR-Spektrum: 7,5-7,9 ppm für 4 aromatische Protonen
14. N-Ethyl-N-ethoxy-carbonyl-methyl-N-dodecyl-D-glucammoniumchlorid Chlorid 6,2 %; ber. 7,1 % IR-Spektrum: 1760 $cm^{-1}$ für Ester-carbonyl
15. N-Ethyl-N-octyl-N-dodecyl-D-glucammonium-bromid Stickstoff 2,6 %; ber. 2,5 % H-NMR-Spektrum: 1,05 ppm (t) für 3 Protonen der $^{\oplus}$N-Et-gruppe
16. N-Benzyl-N-octyl-N-dodecyl-D-glucammonium-chlorid Stickstoff 2,4 %; ber. 2,4 % H-NMR-Spektrum: 7,5-7,7 ppm für 5 aromatische Protonen.

Die Herstellung der Wirkstoffe erfolgt in bekannter Weise durch Alkylierung N-substituierter 2,3,4,5,-Pentahydroxy-n-hexyl-1-amine (Glucamine) (J. Gen. Chem. USSR 49/2420 - 2426 (1979), DE-29 44 296).

Beispiel 1

N,N-Diethyl-N-dodecyl-D-glucammonium-bromid

19 Teile (Gew.Teile) N-Ethyl-N-dodecyl-D-glucamin wurden mit 100 Teilen Ethanol und 5,5 Teilen Ethylbromid in einem Autoklav 10 Stunden auf 100°C erhitzt. Nach dem Abkühlen und Abdampfen des Ethanols erhielt man 20 Teile (82 % der Th.) N,N-Diethyl-N-dodecyl-D-glucammonium-bromid als wasserlösliches Öl. Der Gehalt an ionogenem Brom betrug 15,7 %; berechnet ist 16,4 %. (Verbindung Nr. 4).

Beispiel 2

N-Methyl-N-(4-chlorbenzyl)-N-dodecyl-D-glucammonium-bromid

11 Teile N-Methyl-N-dodecyl-D-glucamin wurden mit 100 Teilen Ethanol und 6,3 Teilen 4-Chlor-benzylbromid 3 Stunden bei 75°C gehalten. Nach dem Abdampfen des Ethanols erhielt man 16,5 Teile (96 % der Theorie) N-Methyl--N-(4-chlorbenzyl)-N-dodecyl-D-glucammoniumbromid als wasserlösliches Öl. Der Gehalt an ionogenem Brom betrug 13,1 %; berechnet ist 14,0 % (Verbindung Nr. 13).

Beispiel 3

N,N,N-Trimethyl-D-glucammonium-chlorid

10,5 Teile N,N-Dimethyl-D-glucamin wurden mit 150 Teilen Ethanol und 28 Teilen Methyljodid 2 Stunden bei 65 bis 70°C gehalten. Beim Abkühlen kristallisierten 15 Teile (86 % der Theorie) N,N,N-Trimethyl-D-glucammonium-jodid mit einem Schmelzpunkt von 115 - 117°C aus.

Die Substanz wurde in 100 Teilen Wasser gelöst und über einen basischen Ionenaustauscher (Lewatit(R) MP 600) laufen lassen. Das Eluat wurde mit 50 Teilen einer 10 gew.%igen Salzsäure versetzt und eingeengt. Der Rückstand wurde mit 50 Teilen Ethanol versetzt und nochmals eingeengt. Man erhielt 9 Teile (69 % der Theorie, bezogen auf N,N-Dimethyl-D-glucamin) N,N,-Trimethyl-D-glucammoniumchlorid als schmierige, hygroskopische Masse. Der Gehalt an ionogenem Chlor betrug 13,4 %; berechnet ist 13,6 % (Verbindung Nr. 1).

Beispiel 4

N-Methyl-N-dodecyl-N-octadecyl-D-glucammonium-bromid

11 Teile N-Methyl-N-dodecyl-D-glucamin wurden mit 10 Teilen 1-Octadecylbromid 5 Stunden bei 150°C erhitzt. Nach dem Abkühlen erhielt man 21 Teile (100 % der Theorie) N-Methyl-N-dodecyl-N-octadecyl-D-glucammonium-bromid als dickflüssiges Öl. Der Gehalt an ionogenem Brom betrug 10,6 %; berechnet ist 11,5 % (Verbindung Nr. 10).

Die Wirkstoffe zeigen eine starke fungitoxische Wirksamkeit insbesondere gegen phytopathogene Pilze. Sie dienen insbesondere zur Verhütung und Heilung von Pflanzenkrankheiten, die durch Mikroorganismen verursacht werden, wie z.B. Botrytis cinerea, Plasmopara viticola, Monilia fructigena, Alternaria solani, Sclerotinia sclerotiorum, Pyricularia oryzae, Pellicularia sasakii, Erysiphe graminis, Erysiphe cichoracearum, Chaetomium globosum, Aspergillus niger, Xanthomonas oryzae, Xanthomonas citri, Phytophthora infestans (an Kartoffeln und Tomaten).

Die Wirkstoffe können gleichzeitig das Wachstum von zwei oder mehr der genannten Pilze unterdrücken und besitzen eine hohe Pflanzenverträglichkeit. Ein Teil der Wirkstoffe zeigt kurative Eigenschaften, d.h. die Anwendung der Mittel kann noch nach erfolgter Infektion der Pflanzen durch die Krankheitserreger vorgenommen werden, um einen sicheren Bekämpfungserfolg zu erzielen.

Die fungiziden Mittel enthalten 0,1 bis 95 % (Gewichtsprozent) Wirkstoff, vorzugsweise 0,5 bis 90 %. Die Aufwandmengen liegen je nach Art des gewünschten Effektes zwischen 0,1 und 5 kg Wirkstoff je ha.

Die Wirkstoffe können auch zusammen mit anderen Wirkstoffen, z.B. Herbiziden, Insektiziden, Wachstumsregulatoren und anderen Fungiziden, oder auch mit Düngemitteln vermischt ausgebracht werden. In vielen Fällen erhält man bei der Mischung mit Fungiziden auch eine Vergrößerung des fungiziden Wirkungsspektrums; bei einer Anzahl dieser Fungizidmischungen treten auch

synergistische Effekte auf, d.h. die fungizide Wirksamkeit des Kombinationsproduktes ist größer als die der addierten Wirksamkeiten der Einzelkomponenten. Eine besonders günstige Vergrößerung des Wirkungsspektrums wird mit folgenden Fungiziden erzielt:

Schwefel,
Dithiocarbamate und deren Derivate, wie
Ferridimethyldithiocarbamat
Zinkdimethyldithiocarbamat
Zinkethylenbisdithiocarbamat
Manganethylenbisdithiocarbamat
Mangan-Zink-ethylendiamin-bis-dithiocarbamat
Tetramethylthiuramdisulfide
Ammoniak-Komplex von Zink-(N,N'-ethylen-bis-dithiocarbamat)
Ammoniak-Komplex von Zink-(N,N'-propylen-bis-dithiocarbamat)
Zink-(N,N'-propylen-bis-dithiocarbamat)
N,N'-Polypropylen-bis-(thiocarbamoyl)-disulfid

Nitroderivate, wie
Dinitro-(1-methylheptyl)-phenylcrotonat
2-sec.-Butyl-4,6-dinitrophenyl-3,3-dimethylacrylat
2-sec.-Butyl-4,6-dinitrophenyl-isopropylcarbonat
5-Nitro-isophthalsäure-di-isopropylester
heterocyclische Strukturen, wie
2-Heptadecyl-2-imidazolin-acetat
2,4-Dichlor-6-(o-chloranilino)-s-triazin
O,O-Diethyl-phthalimidophosphonothioat
5-Amino-1-(bis-(dimethylamino)-phosphinyl)-3-phenyl-1,2,4-triazol)
2,3-Dicyano-1,4-dithiaanthrachinon
2-Thio-1,3-dithio-(4,5,6)-chinoxalin
1-(Butylcarbamoyl)-2-benzimidazol-carbaminsäuremethylester
2-Methoxycarbonylamino-benzimidazol
2-(Furyl-(2)-benzimidazol
2-(Thiazolyl-(4)-benzimidazol
N-(1,1,2,2-Tetrachlorethylthio)-tetrahydrophthalimid
N-Trichlormethylthio-tetrahydrophthalimid
N-Trichlormethyl-phthalimid
N-Dichlorfluormethylthio-N',N'-dimethyl-N-phenyl-schwefelsäurediamid
5-Ethoxy-3-trichlormethyl-1,2,3-thiadiazol
2-Rhodanmethylthiobenzthiazol
1,4-Dichlor-2,5-dimethoxybenzol
4-(2-Chlorphenylhydrazono)-3-methyl-5-isoxazolon
Pyridin-2-thio-1-oxid

8-Hydroxychinolin bzw. dessen Kupfersalz
2,3-Dihydro-5-carboxanilido-6-methyl-1,4-oxathiin-4,4-dioxid
2,3-Dihydro-5-carboxanilido-6-methyl-1,4-oxathiin
2-Methyl-5,6-dihydro-4H-pyran-3-carbonsäure-anilid
2-Methyl-furan-3-carbonsäureanilid
2,5-Dimethyl-furan-3-carbonsäureanilid
2,4,5-Trimethyl-furan-3-carbonsäureanilid
2,5-Dimethyl-furan-3-carbonsäurecyclohexylamid
N-Cyclohexyl-N-methoxy-2,5-dimethyl-furan-3-carbonsäureamid
2-Methyl-benzoesäure-anilid
2-Jod-benzoesäure-anilid
N-Formyl-N-morpholin-2,2,2-trichlorethylacetal
Piperazin-1,4-diylbis-(1-(2,2,2-trichlor-ethyl)-formamid
1-(3,4-Dichloranilino)-1-formylamino-2,2,2-trichlorethan
2,6-Dimethyl-N-tridecyl-morpholin bzw. dessen Salze
2,6-Dimethyl-N-cyclododecyl-morpholin bzw. dessen Salze
N-[3-(p-tert.-Butylphenyl)-2-methylpropyl]-cis-2,6-dimethylmorpholin
N-[3-(p-tert.-Butylphenyl)-2-methylpropyl]-piperidin
1-[2-(2,4-Dichlorphenyl)-4-ethyl-1,3-dioxolan-2-yl-ethyl]-1H-1,2,4-triazol
1-[2-(2,4-Dichlorphenyl)-4-n-propyl-1,3-dioxolan-2-ylethyl]-1H-1,2,4-triazol
N-(n-Propyl)-N-(2,4,6-trichlorphenoxyethyl)-N'-imidazol-yl-harnstoff
1-(4-Chlorphenoxy)-3,3-dimethyl-1-(1H-1,2,4-triazol-1-yl) -(2-Chlorphenyl)- -(4-chlorphenyl)-5-pyrimidin-methanol
5-Butyl-2-dimethylamino-4-hydroxy-6-methyl-pyrimidin
Bis-(p-chlorphenyl)-3-pyridinmethanol
1,2-Bis-(3-ethoxycarbonyl-2-thioureido)-benzol
1,2-Bis-(3-methoxycarbonyl-2-thioureido)-benzol

sowie verschiedene Fungizide, wie
Dodecylguanidinacetat
3-(3-(3,5-Dimethyl-2-oxycyclohexyl)-2-hydroxyethyl)-glutarimid
Hexachlorbenzol
DL-Methyl-N-(2,6-dimethyl-phenyl)-N-furoyl(2)-alaninat,
DL-N-(2,6-Dimethyl-phenyl)-N-(2'-methoxyacetyl)-alanin-methylester,
N-(2,6-Dimethylphenyl)-N-chloracetyl-D,L-2-aminobutyrolacton,
DL-N-(2,6-Dimethylphenyl)-N-(phenylacetyl)-alaninmethylester
5-Methyl-5-vinyl-3-(3,5-dichlorphenyl)-2,4-dioxo-1,3-oxazolidin
3-(3,5-Dichlorphenyl)-5-methyl-5-methoxymethyl-1,3-oxazolidin-2,4-dion
3-(3,5-Dichlorphenyl)-1-isopropylcarbamoylhydantoin
N-(3,5-Dichlorphenyl)-1,2-dimethylcyclopropan-1,2-dicarbonsäureimid
2-Cyano-N-(ethylaminocarbonyl)-2-methoximino-acetamid

2-(Thiocyanomethylthio)-benzthiazol
1-[2-(2,4-Dichlorphenyl)-4-ethyl-1,3-dioxolan-2-yl-methyl]-1H-1,2,4-triazol
2,4,5,6-Tetrachlor-isophthalodinitril
Methylenbisthiocyanat
Tributylzinnoxid
Mercaptobenzthiazol
Benzisothiazolon und seine Alkalisalze
Alkaliverbindungen des N'-Hydroxy-N-cyclohexyl-diazeniumoxids
2-(Methoxy-carbonylamino)-benzimidazol
2-Methyl-3-oxo-5-chlor-thiazolin-3-on
Trihydroxymethyl-nitro-methan
Glutardialdehyd
Chloracetamid

Die Wirkstoffe werden beispielsweise in Form von direkt versprühbaren Lösungen, Suspensionen, Emulsionen, auch in Form von hochprozentigen wäßrigen, öligen oder sonstigen Dispersionen, Pasten, Stäubemitteln, Streumitteln, Granulaten durch Versprühen, Verstäuben, Verstreuen, Verstreichen oder Gießen ausgebracht. Die Anwendungsformen richten sich ganz nach den Verwendungszwecken; sie sollten in der Regel möglichst eine feine Verteilung der neuen Wirkstoffe gewährleisten.

Zur Herstellung von direkt oder nach Emulgieren in Wasser verwendbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische oder aromatische Kohlenwasserstoffe, zum Beispiel Benzol, Toluol, Xylol, Paraffin, Tetrahydronaphthalin, alkylierte Naphthaline oder deren Derivate z.B. Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, wie z.B. Dimethylformamid, Dimethylsulfoxid, N-Methylpyrrolidon, Wasser usw. in Betracht. Bevorzugt wird die Lösung in Wasser.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder

Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylen-octylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Phospolipide Sulfitablaugen und Methylcellulose in Betracht.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Beispiele für solche Pflanzenschutzmittel-Zubereitungen sind:

I. Man vermischt 90 Gewichtsteile der Verbindung 1 mit 100 Gewichtsteilen Wasser und erhält eine Lösung, die zur Anwendung in Form kleinster Tropfen geeignet ist.

II. 20 Gewichtsteile der Verbindung 3 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Doedecylbenzolsulfonsäure und

5 Gewichtsteilen des Anlagerungsproduktes von 40 Mol Ethylenoxid an 1 Mol Ricinusöl besteht. Durch Ausgießen und feines Verteilen der Lösung in Wasser erhält man eine wäßrige Dispersion.

III. 20 Gewichtsteile der Verbindung 5 werden in einer Mischung gelöst, die aus 30 Gewichtsteilen Cyclohexanon, 30 Gewichtsteilen Isobutanol, 20 Gewichtsteilen des Anlagerungsproduktes von 40 Mol Ethylenoxid an 1 Mol Ricinusöl besteht. Durch Eingießen und Verrühren der Lösung in Wasser erhält man eine wäßrige Dispersion.

IV. 20 Gewichtsteile der Verbindung 8 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und Verrühren der Lösung in Wasser, erhält man eine wäßrige Dispersion.

V. 20 Gewichtsteile der Verbindung 9 werden mit 3 Gewichtsteilen des Natriumsalzes der Diisobutylnaphthalin-alpha-sulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in Wasser erhält man eine Spritzbrühe.

VI. 5 Gewichtsteile der Verbindung 10 werden mit 95 Gewichtsteilen feinteiligem Kaolin innig vermischt. Man erhält auf diese Weise ein Stäubemittel, das 5 Gew.-% des Wirkstoffs enthält.

VII. 30 Gewichtsteile der Verbindung 11 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gewichtsteile der Verbindung 15 werden mit 30 Teilen Natriumsalz eines Phenolsulfonsäure-Harnstoff-Formaldehyd-Kondensates, 2 Teilen Kieselgel und 48 Teilen Wasser innig vermischt. Man erhält eine stabile wäßrige Dispersion.

IX. 20 Teile der Verbindung 3 werden mit 2 Teilen Calciumsalz der Dodecylbenzolsulfonsäure, 8 Teilen Fettalkoholpolyglykolether, 2 Teilen Natriumsalz eines Phenolsulfonsäure-harnstoff-formaldehyd-Kondensates und 68 Teilen eines paraffinischen Mineralöls innig vermischt. Man erhält eine stabile ölige Dispersion.

Die folgenden Versuche erläutern die biologische Wirkung der Verbindungen. Vergleichsmittel (A) ist der bekannte Wirkstoff N-Trichlormethylthio--tetrahydrophthalimid , Vergleichsmittel (B) ist das N-Trichlormethylthiophthalimid.

Versuch 1

Wirksamkeit gegen Botrytis cinerea an Paprika

Paprikasämlinge der Sorte "Neusiedler Ideal Elite" werden, nachdem sich 4 bis 5 Blätter gut entwickelt haben, mit wäßrigen Suspensionen, die 80 % Wirkstoff und 20 % Emulgiermittel in der Trockensubstanz enthalten, tropfnaß gespritzt. Nach dem Antrocknen des Spritzbelages werden die Pflanzen mit einer Konidienaufschwemmung des Pilzes Botrytis cinerea besprüht und bei 22 bis 24°C in eine Kammer mit hoher Luftfeuchtigkeit gestellt. Nach 5 Tagen hat sich die Krankheit auf den unbehandelten Kontrollpflanzen so stark entwickelt, daß die entstandenen Blattnekrosen den überwiegenden Teil der Blätter bedecken.

Das Ergebnis des Versuchs zeigt, daß beispielsweise die Wirkstoffe 3, 4, 5, 11, 12, 14 bei der Anwendung als 0,05 %ige (Gew.%) Spritzbrühe eine bessere fungizide Wirkung (beispielsweise 90 %) zeigten als der Wirkstoff A (70 %).

Versuch 2

Wirksamkeit gegen Plasmopara viticola

Blätter von Topfreben der Sorte "Müller-Thurgau" werden mit wäßriger Spritzbrühe, die 80 % Wirkstoff und 20 % Emulgiermittel in der Trockensubstanz enthält, besprüht. Um die Wirkungsdauer der Wirkstoffe beurteilen zu können, werden die Pflanzen nach dem Antrocknen des Spritzbelages 10 Tage im Gewächshaus aufgestellt. Erst dann werden die Blätter mit einer Zoosporenaufschwemmung von Plasmopara viticola (Rebenperonospora) infiziert. Danach werden die Reben zunächst für 16 Stunden in einer wasserdampfgesättigten Kammer bei 24°C und anschließend für 8 Tage in einem Gewächshaus mit Temperaturen zwischen 20 und 30°C aufgestellt. Nach dieser Zeit werden die Pflanzen zur Beschleunigung des Sporangienträgerausbruches abermals für 16 Stunden in der feuchten Kammer aufgestellt. Dann erfolgt die Beurteilung des Ausmaßes des Pilzausbruches auf den Blattunterseiten.

Das Ergebnis des Versuchs zeigt, daß beispielsweise die Wirkstoffe 4, 6, 12 bei der Anwendung als 0,025 %ige Spritzbrühe eine bessere fungizide Wirkung zeigten (beispielsweise 97 %) als der Wirkstoff B (90 %).

Versuch 3

Wirksamkeit gegen Weizenmehltau

Blätter von in Töpfen gewachsenen Weizenkeimlingen der Sorte "Jubilar" werden mit wäßriger Spritzbrühe, die 80 % Wirkstoff und 20 % Emulgiermittel in der Trockensubstanz enthält, besprüht und 24 Stunden nach dem Antrocknen des Spritzbelages mit Oidien (Sporen) des Weizenmehltaus (Erysiphe graminis var. tritici) bestäubt. Die Versuchspflanzen werden anschließend im Gewächshaus bei Temperaturen zwischen 20 und 22°C und 75 bis 80 % relativer Luftfeuchtigkeit aufgestellt. Nach 7 Tagen wird das Ausmaß der Mehltauentwicklung ermittelt.

Das Ergebnis des Versuchs zeigt, daß beispielsweise die Wirkstoffe 13 und 15 bei der Anwendung als 0,025 %ige Spritzbrühe eine sehr gute fungizide Wirkung zeigten (beispielsweise 100 %).

Patentansprüche

1. Fungizide Mittel, enthaltend einen inerten Trägerstoff und eine Verbindung der allgemeinen Formel

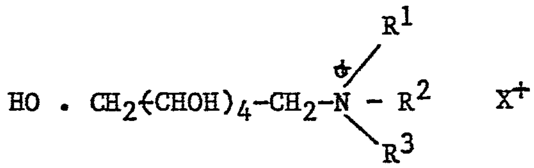

in der $R^1$, $R^2$, $R^3$ gleich oder verschieden sind und einen gegebenenfalls durch Alkoxycarbonyl mit 2 bis 4 Kohlenstoffatomen substituierten Alkylrest mit 1 bis 20 Kohlenstoffatomen, einen Cycloalkylrest mit 3 bis 6 Kohlenstoffatomen, einen gegebenenfalls durch Halogen im Arylteil substituierten Aralkylrest mit 7 bis 15 Kohlenstoffatomen sowie einen gegebenenfalls durch Hydroxy, Halogen, Nitro- oder Alkoxy mit 1 bis 2 Kohlenstoffatomen substituierten Arylrest bedeuten und darüber hinaus $R^1$ und $R^2$ Glieder eines gemeinsamen 5- oder 6-gliedrigen Ringes sein können, der noch weitere Heteroatome enthalten kann, und X einen Säurerest bedeutet.

2. Fungizid gemäß Anspruch 1, dadurch gekennzeichnet, daß $R^1$ einen gegebenenfalls durch Alkoxycarbonyl mit 2 bis 3 Kohlenstoffatomen substituierten Alkylrest mit 1 bis 18 Kohlenstoffatomen, einen gegebenenfalls durch Chlor substituierten Phenylalkylrest mit 1 bis 3 Kohlenstoffatomen im Alkylrest, $R^2$ einen Alkylrest mit 1 bis 4 Kohlenstoffatomen, $R^3$ den Dodecylrest und X ein Chloridanion oder Bromidanion bedeutet.

3. 2,3,4,5,6-Pentahydroxy-n-hexyl-1-ammoniumsalz, wie in Anspruch 1 definiert, mit der Maßgabe, daß $R^1$, $R^2$ und $R^3$ verschieden von Methyl sind.

4. Ammoniumsalz gemäß Anspruch 3, dadurch gekennzeichnet, daß $R^1$ einen Alkylrest mit 2 bis 8 Kohlenstoffatomen, einen durch Alkoxycarbonyl mit 2 bis 4 Kohlenstoffatomen substituierten Alkylrest mit 1 bis 4 Kohlenstoffatomen oder einen Benzylrest, $R^2$ einen Alkylrest mit 2 bis 10 Kohlenstoffatomen, $R^3$ einen Dodecylrest und X das Chloridanion oder Bromidanion bedeutet.

5. Verfahren zur Bekämpfung von Pilzen, dadurch gekennzeichnet, daß man die Pilze oder die von Pilzbefall bedrohten Pflanzen, Flächen oder Saatgüter mit einer Verbindung gemäß Anspruch 1 behandelt.

Europäisches Patentamt

# EUROPÄISCHER RECHERCHENBERICHT

Application number

EP 84 10 2338

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CHEMICAL ABSTRACTS, Band 82, Nr. 15, 14. April 1975, Seite 168, Nr. 100590d, Columbus, Ohio, USA; V.I. VEKSLER et al.: "D-Sorbitol derivatives as cationic surfactants" & ZH. OBSHCH. KHIM. 1974, 44(10), 2367-2368<br>----- | 1-5 | C 07 C 91/26<br>A 01 N 33/12 |
| | | | RECHERCHIERTE SACHGEBIETE (Int. Cl. 3) |
| | | | C 07 C 91/00 |

Der vorliegende Recherchenbericht wurde für alle Patentansprüche erstellt.

| Recherchenort | Abschlußdatum der Recherche | Prüfer |
|---|---|---|
| DEN HAAG | 08-06-1984 | GAUTIER R.H.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument